# EUROPÄISCHE PATENTSCHRIFT

(11) **EP 2 316 716 B1**
(45) Veröffentlichungstag und Bekanntmachung des Hinweises auf die Patenterteilung: **23.05.2012**
(21) Anmeldenummer: 09013607.8
(22) Anmeldetag: 29.10.2009
(51) Int. Cl.: B62D 65/18, B65G 17/20

(54) **Transportvorrichtung für eine Fahrzeugmontageeinrichtung**
Transport device for a vehicle assembly device
Dispositif de transport pour un dispositif de montage de véhicule

(43) Veröffentlichungstag der Anmeldung: 04.05.2011
(73) Patentinhaber: SIEMENS AKTIENGESELLSCHAFT, 80333 München (DE)
(72) Erfinder: Assmann, Roland Heinz Dr., 63654 Büdingen (DE); Hörmann, Walfried, 63825 Schöllkrippen (DE); Ries, Karl-Hans, 64823 Gross-Umstadt (DE); Wolfrum, Klaus, 90425 Nürnberg (DE)

(56) Entgegenhaltungen:
- EP-A1- 0 411 517
- EP-A1- 1 157 960
- EP-A2- 0 379 207
- FR-A1- 2 437 465
- US-A1- 2008 179 167

## Beschreibung

Die Erfindung betrifft eine Transportvorrichtung für Fahrzeugmontageeinrichtungen, die sich beispielsweise entlang Transportstrecken oder Produktionsstraßen erstrecken, entsprechend dem Oberbegriff gemäß Anspruch 1. Eine solche Transportvorrichtung ist beispielsweise aus EP 0 379 207 A2 bekannt.

Zur Optimierung von Fertigungs- oder Transportabläufen werden in Fahrzeugmontageeinrichtungen seit Jahrzehnten Fördersysteme verwendet. Durch die Fördersysteme werden zu fertigende Fahrzeuge, insbesondere Automobile oder Teile davon, von einer Arbeitsstation zur nächsten transportiert. Weit verbreitet sind Boden- und Hängefördersysteme.

Üblicherweise werden noch nicht vollständig montierte Fahrzeuge mittels Hängeförderer in einer Fahrzeugmontageeinrichtung transportiert. Stark verbreitet sind Elektrohängebahnen. Aus DE 31 46 807 A1 ist ein Fördersystem bekannt, bei der eine Kraftfahrzeugkarosserie zum Transport an Trägern aufgehängt ist.

Bekannte Hängefördersysteme umfassen entweder Kettenförderer, "Power & Free" Förderer oder Elektrohängebahnen. "Power & Free" Fördersysteme weisen ein Zweiebenensystem auf, bei dem in einer oberen Ebene eine Förderkette läuft. In einer unteren Ebene befinden sich von der Förderkette geschleppte Laufwagen. Transportgut läßt sich von der Förderkette trennen. Trotz kontinuierlich laufender Förderkette ist ein diskontinuierlicher Materialfluß möglich. "Power & Free" Fördersysteme lassen jedoch eine nur bedingt flexible Transportweg- bzw. Linienführung und Fördergeschwindigkeitssteuerung zu. Kreisförderer-basierte System ermöglichen weder eine verzweigte Linienführung noch eine flexible Geschwindigkeitssteuerung. Elektrohängebahnen sind kostenintensiv und aufwendig zu steuern. Insbesondere sind für jedes Hängebahnfahrzeug eine eigene Fahrzeugsteuerung und mindestens eine Antriebseinrichtung erforderlich. Darüber hinaus können Steigungs- oder Gefällestrecken mit Elektrohängebahnen nur eingeschränkt befahren werden.

Der vorliegenden Erfindung liegt die Aufgabe zugrunde, eine Transportvorrichtung für eine Fahrzeugmontageeinrichtung zu schaffen, die oben genannte Nachteile bestehender Hängefördersysteme beseitigt.

Diese Aufgabe wird erfindungsgemäß durch eine Transportvorrichtung mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Transportvorrichtung für eine Fahrzeugmontageeinrichtung umfaßt zumindest ein erstes und zweites Lasttransportmittel zum Transport zumindest einer hängenden Last entlang eines Transportwegs. Das erste Lasttransportmittel kann beispielsweise ein Anhänger sein, während das zweite Lasttransportmittel ein Zugfahrzeug sein kann, das den Anhänger zieht. Die Lasttransportmittel sind entlang des Transportwegs nebeneinander kollisionsfrei bewegbar. Entlang zumindest eines ersten Transportwegabschnitts erstreckt sich zumindest eine erste Führungsschiene. Die erste Führungsschiene weist zumindest ein Aufnahme- und/oder Stützelement für zumindest ein mit dem ersten Lasttransportmittel verbundenes Rad auf, das entlang des Transportwegs mittels einer dem zweiten Lasttransportmittel zugeordneten Motorantriebseinrichtung abrollend bewegbar ist.

Außerdem erstreckt sich erfindungsgemäß entlang zumindest eines zweiten Transportwegabschnitts im wesentlichen parallel zur ersten Führungsschiene zumindest eine zweite Führungsschiene. Die zweite Führungsschiene weist zumindest ein Aufnahme- und/oder Stützelement für zumindest ein mit dem zweiten Lasttransportmittel verbundenes Rad auf, das entlang des Transportwegs mittels der dem zweiten Lasttransportmittel zugeordneten Motorantriebseinrichtung abrollend bewegbar ist.

Erfindungsgemäß ist ferner zumindest ein kollisionsfrei bewegbares drittes Lasttransportmittel zum Transport zumindest einer hängenden Last entlang des Transportwegs vorgesehen. Das mit dem ersten Lasttransportmittel verbundene Rad kann dann entlang des Transportwegs mittels der dem zweiten Lasttransportmittel zugeordneten Motorantriebseinrichtung bzw. einer dem dritten Lasttransportmittel zugeordneten Kettenantriebseinrichtung abrollend bewegt werden. Außerdem ist erfindungsgemäß zumindest eine sich entlang zumindest eines dritten Transportwegabschnitts im wesentlichen parallel zur ersten bzw. zweiten Führungsschiene erstreckende umlaufende Antriebskette vorgesehen, die der Kettenantriebseinrichtung zugeordnet ist. Dabei weist die Antriebskette zumindest ein Kettenglied auf, das mit einem dem dritten Lasttransportmittel zugeordneten Führungselement verbunden werden kann. Das dritte Lasttransportmittel muß nicht notwendigerweise einen Wagen umfassen, sondern kann lediglich ein mit der Antriebskette verbindbares Mitnehmerelement sein.

Die Ketteriantriebseinrichtung erstreckt sich entsprechend einer vorteilhaften Ausgestaltung der vorliegenden Erfindung nur entlang des dritten Transportwegabschnitts, oder es kann eine Mehrzahl von Kettenantriebseinrichtungen vorgesehen sein, die sich entlang nichtzusammenhängender dritter Transportwegabschnitte erstrecken. Außerdem können sich der erste, zweite und dritte Transportwegabschnitt jeweils über den gesamten Transportweg erstrecken oder nur partiell miteinander überschneiden.

Mittels der ersten Führungsschiene kann beispielsweise ein passives Lasttransportmittel, dem als Anhänger keine eigene Antriebseinrichtung zugeordnet ist, durch ein Zugfahrzeug als angekoppeltes aktives Lasttransportmittel gezogen werden, das in der zweiten Führungsschiene geführt ist und eine eigene Motorantriebseinrichtung aufweist. Durch eine kollisionsfrei Bewegbarkeit der Lasttransportmittel können aktive Lasttransportmittel wieder derart von passiven Lasttransportmitteln entkoppelt werden, daß Überholvorgänge entlang des Transportwegs ermöglicht werden. Durch die zusätzliche Kettenantriebseinrichtung werden ein Transport über steile Steigungs- bzw. Gefällestrecken sowie Zwangssynchronisierung und Pufferstrecken ermöglicht.

Die vorliegende Erfindung wird nachfolgend an einem Ausführungsbeispiel anhand der Zeichnung näher erläutert. Es zeigt
- Figur 1: eine Querschnittsdarstellung einer erfindungsgemä- ßen Transportvorrichtung,
- Figur 2: eine Querschnittsdarstellung von Führungsschienen der Transportvorrichtung gemäß Figur 1,
- Figur 3: eine Querschnittsdarstellung einer Variante der Transportvorrichtung gemäß Figur 1.

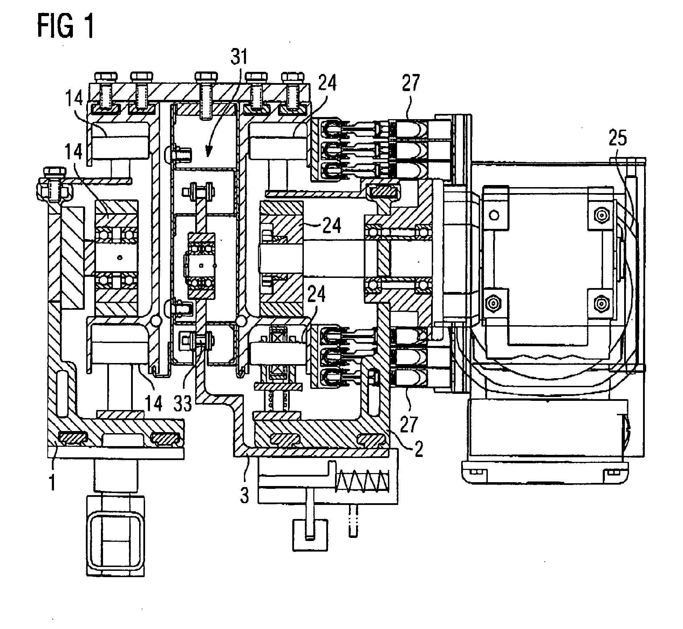

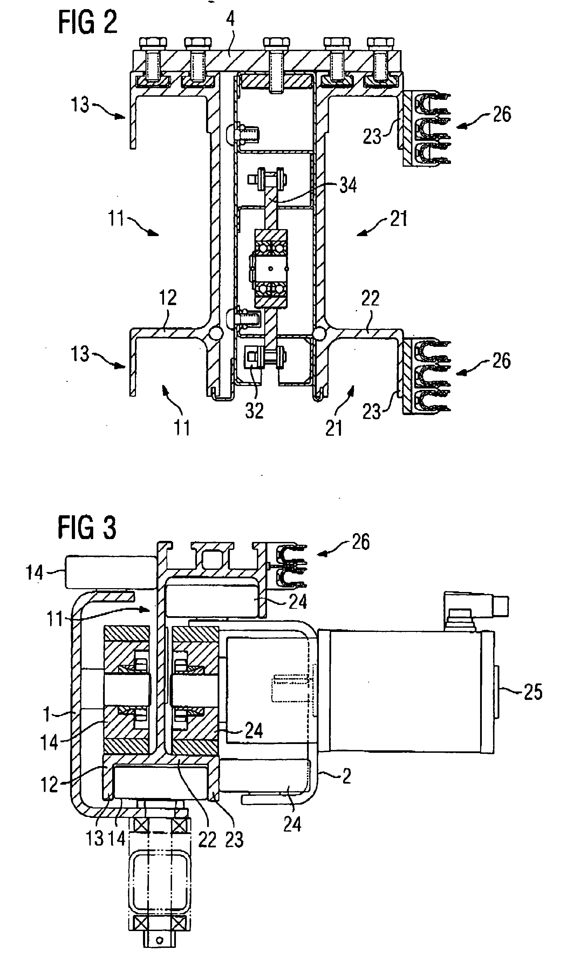

Die in Figur 1 dargestellte Transportvorrichtung umfaßt ein erstes, zweites und drittes Lasttransportmittel zum Transport jeweils einer hängenden Last entlang eines Transportwegs. Dabei sind die Lasttransportmittel 1-3 entlang des Transportwegs nebeneinander kollisionsfrei bewegbar. Zur besseren Übersichtlichkeit sind in Figur 2 Führungsschienen 11, 21 der Transportvorrichtung gemäß Figur 1 ohne die Lasttransportmittel 1-3 dargestellt. Eine erste Führungsschienenanordnung mit zwei ersten Führungsschienen 11 erstreckt sich entlang des Transportwegs. Die erste Führungsschienenanordnung weist eine horizontal verlaufende Stützwand 12 und zwei vertikal verlaufende Seitenwände 13 als Stütz- bzw. Aufnahmeelemente für drei mit ersten Lasttransportmittel 1 verbundene Räder 14 auf. Dabei sind die mit dem ersten Lasttransportmittel 1 verbundenen Räder 14 auf der Stützwand 12 bzw. entlang der Seitenwände 13 abrollend bewegbar. Im vorliegenden Ausführungsbeispiel ist das erste Lasttransportmittel ein Anhänger, das durch das zweite Lasttransportmittel als Zugfahrzeug gezogen wird.

Zusätzlich zur ersten Führungsschienenanordnung ist eine spiegelsymmetrisch ausgestaltete zweite Führungsschienenanordnung mit zwei zweiten Führungsschienen 21 an einem gemeinsamen sich entlang des Transportwegs erstreckenden Grundkörper 4 befestigt. In entsprechender Weise umfaßt die zweite · Führungsschienenanordnung eine horizontal verlaufende Stützwand 22 und zwei vertikal verlaufende Seitenwände 23 als Stütz- bzw. Aufnahmeelemente für drei mit zweiten Lasttransportmittel 2 verbundene Räder 24. Dabei sind die mit dem zweiten Lasttransportmittel 2 verbundenen Räder 24 auf der Stützwand 22 bzw. entlang der Seitenwände 23 abrollend bewegbar. Ein mit dem zweiten Lasttransportmittel 2 verbundenes Rad ist durch eine Motorantriebseinheit 25 angetrieben. Die Motorantriebseinheit 25 umfaßt einen Elektromotor mit zwei Stromabnehmeranordnungen 27, die Kontakte zu jeweils einer Stromschienenanordnung 26 aufweisen. Die Stromabnehmerschienenanordnungen 26 sind an der zweiten Führungsschienenanordnung an einer von der ersten Führungsschienenanordnung abgewandten Seite angeordnet. Entsprechend einer alternativen Ausführungsform kann die Motorantriebseinheit 25 auf einem Linearmotor basieren.

Im Gegensatz zum zweiten Lasttransportmittel 2 ist dem ersten Lasttransportmittel 1 keine eigene Antriebseinrichtung zugeordnet. Statt dessen kann das erste Lasttransportmittel 1 an das zweite Lasttransportmittel 2 oder dritte Lasttransportmittel 3 angekoppelt und entlang des Transportwegs mittels der dem zweiten Lasttransportmittel 2 zugeordneten Motorantriebseinrichtung bzw. einer dem dritten Lasttransportmittel 3 zugeordneten Kettenantriebseinrichtung 31 bewegt werden.

Da die Lasttransportmittel 1-3 bei Entkopplung entlang des Transportwegs kollisionsfrei nebeneinander und unabhängig voneinander bewegt werden können, sind gegenseitige Überholvorgänge möglich, ohne daß sich aktiv und passiv angetriebene Lasttransportmittel blockieren.

Parallel zur ersten und zweiten Führungsschienenanordnung erstreckt sich entlang des Transportwegs eine umlaufende Antriebskette 32, die der Kettenantriebseinrichtung 31 zugeordnet ist. Die Antriebskette weist eine Vielzahl von Kettengliedern auf, die jeweils mit einem dem dritten Lasttransportmittel 3 zugeordneten Führungselement 33 verbunden werden können. Des weiteren ist die Kettenantriebseinrichtung 31 direkt zwischen der ersten und zweiten Führungsschienenanordnung vorgesehen und ebenfalls am gemeinsamen Grundkörper 4 befestigt.

Entsprechend der in Figur 3 dargestellten Variante erstreckt sich die Kettenantriebseinrichtung 31 nur entlang eines Transportwegabschnitts, so daß die in Figur 3 dargestellte Transportvorrichtung abschnittsweise nur die erste und zweite Führungsschienenanordnung umfaßt und ein Kettenkanal entfällt.

Die Transportvorrichtung entsprechend dem vorliegenden Ausführungsbeispiel ermöglicht eine Realisierung eines auf einer Elektrohängebahnschiene frei fahrbaren Fahrzeugs als zweitem Lasttransportmittel, das mit nichtangetriebenen Gehängen auf einer separaten Führungsbahn als ersten Lasttransportmitteln zu einem Fahrzeugzug kombiniert werden kann. Auf Steigungs-, Gefälle- oder Pufferstrecken oder für einen zwangssynchronisierten Betrieb kann der Fahrzeugzug mittels eines Kettenförderers bewegt werden.

Insbesondere können mit der beschriebenen Transportvorrichtung verfahrenstechnisch kritische Abschnitte, wie Lackerbereiche, ohne Elektroantrieb, durchfahren werden. Darüber hinaus ergeben sich durch Fahrzeugzugbildung deutliche Energieeinsparungsmöglichkeiten sowie eine reduzierte Anlagenkomplexität und verringerte Investitionskosten.

Die Anwendung der vorliegenden Erfindung ist nicht auf das beschriebene Ausführungsbeispiel beschränkt.

## Patentansprüche

1. Transportvorrichtung für eine Fahrzeugmontageeinrichtung mit
- zumindest einem ersten und zweiten Lasttransportmittel (1, 2) zum Transport zumindest einer hängenden Last entlang eines Transportwegs, wobei das erste und zweite Lasttransportmittel (1, 2) entlang des Transportwegs nebeneinander kollisionsfrei bewegbar sind,
- zumindest einer sich entlang zumindest eines ersten Transportwegabschnitts erstreckenden ersten Führungsschiene (11), die zumindest ein Aufnahme- und/oder Stützelement (12, 13) für zumindest ein mit dem ersten Lasttransportmittel (1) verbundenes Rad (14) aufweist, das entlang des Transportwegs mittels einer dem zweiten Lasttransportmittel (2) zugeordneten Motorantriebseinrichtung (25) abrollend bewegbar ist,
- zumindest einer sich entlang zumindest eines zweiten Transportwegabschnitts im wesentlichen parallel zur ersten Führungsschiene (11) erstreckenden zweiten Führungsschiene (21), die zumindest ein Aufnahme- und/oder Stützelement (22, 23) für zumindest ein mit dem zweiten Lasttransportmittel (2) verbundenes Rad (24) aufweist, das entlang des Transportwegs mittels der dem zweiten Lasttransportmittel (2) zugeordneten Motorantriebseinrichtung (25) abrollend bewegbar ist,
**dadurch gekennzeichnet,**
- **daß** zumindest ein drittes Lasttransportmittel (3) zum Transport zumindest einer hängenden Last entlang des Transportwegs vorgesehen ist, wobei das erste und zweite und/oder dritte Lasttransportmittel (1-3) entlang des Transportwegs nebeneinander kollisionsfrei bewegbar sind,
- **daß** das mit dem ersten Lasttransportmittel (1) verbundene Rad (14) entlang des Transportwegs mittels der dem zweiten Lasttransportmittel (2) zugeordneten Motorantriebseinrichtung (25) und/oder einer dem dritten Lasttransportmittel (3) zugeordneten Kettenantriebseinrichtung (31) abrollend bewegbar ist,
- **daß** zumindest eine sich entlang zumindest eines dritten Transportwegabschnitts im wesentlichen parallel zur ersten und/oder zweiten Führungsschiene (11, 21) erstreckende umlaufende Antriebskette (32) vorgesehen ist, die der Kettenantriebseinrichtung (31) zugeordnet ist und zumindest ein Kettenglied aufweist, das mit einem dem dritten Lasttransportmittel (3) zugeordneten Führungselement (33) verbindbar ist.

2. Transportvorrichtung nach Anspruch 1,
bei der die erste und zweite Führungsschiene (11, 21) an einem gemeinsamen sich entlang des Transportwegs erstreckenden Grundkörper (4) befestigt sind.

3. Transportvorrichtung nach einem der Ansprüche 1 oder 2,
bei der sich die Kettenantriebseinrichtung (31) nur entlang des dritten Transportwegabschnitts erstreckt oder eine Mehrzahl von Kettenantriebseinrichtungen (31) vorgesehen ist, die sich entlang nichtzusammenhängender dritter Transportwegabschnitte erstrecken.

4. Transportvorrichtung nach einem der Ansprüche 1 bis 3,
bei der die Kettenantriebseinrichtung (31) zwischen der ersten und zweiten Führungsschiene (11, 21) angeordnet und an einem gemeinsamen sich entlang des Transportwegs erstreckenden Grundkörper (4) befestigt ist.

5. Transportvorrichtung nach einem der Ansprüche 1 bis 4,
bei der sich der erste, zweite und dritte Transportwegabschnitt partiell überschneiden.

6. Transportvorrichtung nach einem der Ansprüche 1 bis 5,
bei der die erste und zweite Führungsschiene (11, 21) spiegelsymmetrisch ausgestaltet sind.

7. Transportvorrichtung nach Anspruch 6,
bei der an der zweiten Führungsschiene (21) an einer von der ersten Führungsschiene (11) abgewandten Seite eine Stromabnehmerschienenanordnung (26) angeordnet ist.

8. Transportvorrichtung nach Anspruch 7,
bei der die Motorantriebseinheit (25) einen Elektromotor mit einer Stromabnehmeranordnung (27) umfaßt, die zumindest einen Kontakt zur Stromschienenanordnung (26) aufweist.

9. Transportvorrichtung nach einem der Ansprüche 1 bis 8,
bei der ein mit dem zweiten Lasttransportmittel (2) verbundenes Rad (24) durch die Motorantriebseinheit (25) angetrieben ist.

10. Transportvorrichtung nach einem der Ansprüche 1 bis 6,
bei der die Motorantriebseinheit (25) einen Linearmotor umfaßt.

11. Transportvorrichtung nach einem der Ansprüche 1 bis 10,
bei der zwei Lasttransportmittel (1-3) miteinander gekoppelt sind.

12. Transportvorrichtung nach einem der Ansprüche 1 bis 11,
bei der die erste und zweite Führungsschiene (11, 21) von einer integrierten Führungsschienenanordnung umfaßt sind.

## Claims

1. Transport device for a vehicle assembly device, with
- at least one first and second load transport means (1, 2) for transporting at least one hanging load along a transport path, wherein the first and second load transport means (1, 2) are moveable next to each other along the transport path without colliding,
- at least one first guide rail (11) which extends along at least one first transport path section and has at least one receiving and/or supporting element (12, 13) for at least one wheel (14), which is connected to the first load transport means (1) and is moveable in a rolling manner along the transport path by means of a motor driving device (25) assigned to the second load transport means (2),
- at least one second guide rail (21) which extends along at least one second transport path section substantially parallel to the first guide rail (11) and has at least one receiving and/or supporting element (22, 23) for at least one wheel (24), which is connected to the second load transport means (2) and is moveable in a rolling manner along the transport path by means of the motor driving device (25) assigned to the second load transport means (2),
**characterized**
- **in that** at least one third load transport means (3) for transporting at least one hanging load along the transport path is provided, the first and second and/or third load transport means (1-3) being moveable next to one another along the transport path without colliding,
- **in that** the wheel (14) which is connected to the first load transport means (1) is moveable in a rolling manner along the transport path by means of the motor driving device (25) assigned to the second load transport means (2) and/or a chain driving device (31) assigned to the third load transport means (3),
- **in that** at least one circulating driving chain (32) extending along at least one third transport path section substantially parallel to the first and/or second guide rail (11, 21) is provided, the driving chain being assigned to the chain driving device (31) and having at least one chain link which can be connected to a guide element (33) assigned to the third load transport means (3).

2. Transport device according to Claim 1, in which the first and second guide rails (11, 21) are fastened to a common basic body (4) extending along the transport path.

3. Transport device according to either of Claims 1 and 2, in which the chain driving device (31) extends only along the third transport path section, or there is a plurality of chain driving devices (31) which extend along third transport path sections which are not linked.

4. Transport device according to one of Claims 1 to 3, in which the chain driving device (31) is arranged between the first and second guide rails (11, 21) and is fastened to a common basic body (4) extending along the transport path.

5. Transport device according to one of Claims 1 to 4, in which the first, second and third transport path sections partially intersect.

6. Transport device according to one of Claims 1 to 5, in which the first and second guide rails (11, 21) are configured mirror-symmetrically.

7. Transport device according to Claim 6, in which a busbar arrangement (26) is arranged on the second guide rail (21) on a side facing away from the first guide rail (11).

8. Transport device according to Claim 7, in which the motor driving unit (25) comprises an electric motor with a current collector arrangement (27) which has at least one contact with the busbar arrangement (26).

9. Transport device according to one of Claims 1 to 8, in which a wheel (24) which is connected to the second load transport means (2) is driven by the motor driving unit (25).

10. Transport device according to one of Claims 1 to 6, in which the motor driving unit (25) comprises a linear motor.

11. Transport device according to one of Claims 1 to 10, in which two load transport means (1-3) are coupled to each other.

12. Transport device according to one of Claims 1 to 11, in which the first and second guide rails (11, 21) are enclosed by an integrated guide rail arrangement.

## Revendications

1. Installation de transport pour un dispositif de montage de véhicule comprenant
- au moins un premier et un deuxième moyens ( 1, 2 ) de transport de charge pour le transport d'au moins une charge suspendue le long d'une voie de transport, le premier et le deuxième moyens ( 1, 2 ) de transport de charge étant mobiles sans collision l'un à côté de l'autre le long de la voie de transport,
- au moins un premier rail ( 11 ) de guidage, qui s'étend le long d'au moins un premier tronçon de la voie de transport et qui comporte au moins un élément ( 12, 13 ) de réception et/ou d'appui d'au moins une roue ( 14 ) reliée au premier moyen ( 1 ) de transport de charge, roue qui peut se déplacer en roulant au moyen d'un dispositif ( 25 ) d'entraînement motorisé associé au deuxième moyen ( 2 ) de transport de charge,
- au moins un deuxième rail ( 21 ) de guidage, qui s'étend le long d'au moins un deuxième tronçon de la voie de transport sensiblement parallèlement au premier rail ( 11 ) de guidage et qui a au moins un élément ( 22, 23 ) de réception et/ou d'appui d'au moins une roue ( 24 ) reliée au deuxième moyen ( 2 ) de transport de charge, roue qui peut se déplacer en roulant le long de la voie de transport au moyen du dispositif ( 25 ) d'entraînement motorisé associé au deuxième moyen ( 2 ) de transport de charge,
**caractérisée**
- **en ce qu'**il est prévu au moins un troisième moyen ( 3 ) de transport de charge pour le transport d'au moins une charge suspendue le long de la voie de transport, le premier et le deuxième et/ou le troisième moyens ( 1 à 3 ) de transport de charge étant mobiles sans collision les uns à côté des autres le long de la voie de transport,
- **en ce que** la roue ( 14 ) reliée au premier moyen ( 1 ) de transport de charge peut se déplacer en roulant le long de la voie de transport au moyen du dispositif ( 25 ) d'entraînement motorisé associé au deuxième moyen ( 2 ) de transport de charge et/ou d'un dispositif ( 31 ) d'entraînement à chaîne associé au troisième moyen ( 3 ) de transport de charge,
- **en ce qu'**il est prévu au moins une chaîne ( 32 ) d'entraînement sans fin, qui s'étend sensiblement parallèlement au premier et/ou deuxième rail ( 11, 21 ) de guidage, qui est associée au dispositif ( 31 ) d'entraînement par chaîne et qui comporte au moins un maillon qui peut être relié à un élément ( 33 ) de guidage associé au troisième moyen ( 3 ) de transport de charge.

2. Installation de transport suivant la revendication 1,
dans laquelle le premier et le deuxième rails ( 11, 21 ) de guidage sont fixés à une pièce ( 4 ) de base commune, qui s'étend le long de la voie de transport.

3. Installation de transport suivant l'une des revendications 1 ou 2,
dans laquelle le dispositif ( 31 ) d'entraînement par chaîne ne s'étend que le long du troisième tronçon de la voie de transport ou il est prévu une multiplicité de dispositifs ( 31 ) d'entraînement par chaîne, qui s'étendent le long de troisièmes tronçons de voie de transport qui ne sont pas connexes.

4. Installation de transport suivant l'une des revendications 1 à 3,
dans laquelle le dispositif ( 31 ) d'entraînement par chaîne est disposé entre le premier et le deuxième rails ( 11, 21 ) de guidage et est fixé à une pièce ( 4 ) de base commune, qui s'étend le long de la voie de transport.

5. Installation de transport suivant l'une des revendications 1 à 4,
dans laquelle le premier, deuxième et troisième tronçons de voie de transport se chevauchent partiellement.

6. Installation de transport suivant l'une des revendications 1 à 5,
dans laquelle le premier et le deuxième rails ( 11, 21 ) de guidage sont symétriques comme en un miroir.

7. Installation de transport suivant la revendication 6,
dans laquelle un dispositif ( 26 ) de barre de pantographe est disposé sur le deuxième rail ( 21 ) de guidage du côté éloigné du premier rail ( 11 ) de guidage.

8. Installation de transport suivant la revendication 7,
dans laquelle le groupe ( 25 ) d'entraînement motorisé comprend un moteur électrique ayant un agencement ( 27 ) de pantographe, qui a au moins un contact avec le dispositif ( 6 ) de barre de pantographe.

9. Installation de transport suivant l'une des revendications 1 à 8,
dans laquelle la roue ( 24 ) reliée au deuxième moyen ( 2 ) de transport de charge est entraînée par le groupe ( 25 ) d'entraînement motorisé.

10. Installation de transport suivant l'une des revendications 1 à 6,
dans laquelle le groupe ( 25 ) d'entraînement motorisé comprend un moteur linéaire.

11. Installation de transport suivant l'une des revendications 1 à 10,
dans laquelle deux moyens ( 1 à 3 ) de transport de charge sont couplés entre eux.

12. Installation de transport suivant l'une des revendications 1 à 11,
dans laquelle le premier et le deuxième rails ( 11, 21 ) de guidage sont compris dans un dispositif de rails de guidage intégré.
